(19) **Europäisches Patentamt / European Patent Office / Office européen des brevets**

(11) **EP 4 550 675 A1**

(12) **EUROPEAN PATENT APPLICATION**
published in accordance with Art. 153(4) EPC

(43) Date of publication:
**07.05.2025 Bulletin 2025/19**

(21) Application number: **22948624.6**

(22) Date of filing: **30.06.2022**

(51) International Patent Classification (IPC):
**H04B 1/40** (2015.01)

(86) International application number:
**PCT/CN2022/103150**

(87) International publication number:
**WO 2024/000522 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Quectel Wireless Solutions Co., Ltd.**
**Shanghai 201601 (CN)**

(72) Inventors:
• **ZHAO, Zheng**
  **Shanghai 201601 (CN)**
• **LV, Ling**
  **Shanghai 201601 (CN)**
• **YANG, Zhongzhi**
  **Shanghai 201601 (CN)**
• **QIAN, Penghe**
  **Shanghai 201601 (CN)**

(74) Representative: **Fish & Richardson P.C.**
**Highlight Business Towers**
**Mies-van-der-Rohe-Straße 8**
**80807 München (DE)**

(54) **COMMUNICATION METHOD AND TERMINAL DEVICE**

(57)    The present disclosure provides a method for communication and a terminal device, which are conducive to saving a cost of a baseband chip. The method is applied at a terminal device, and the terminal device includes a baseband chip, a radio frequency front end, a beam control system, a phase modulator and an antenna system. The beam control system is located outside the baseband chip, and the phase modulator has one end connected to one of the antenna system and the radio frequency front end and has the other end connected to the beam control system. The beam control system adjusts a generated beam of the antenna system via the phase modulator.

Beam control system adjusts a generated beam of the antenna via a phase shifter ⟩ 510

FIG. 5

**Description**

**TECHNICAL FIELD**

The present disclosure relates to the field of communication technology, and more specifically to a method for communication and a terminal device.

**BACKGROUND**

Currently, an antenna system is controlled by a baseband chip, and the control of the antenna system by the baseband chip is related to configuration of the baseband chip. When the configuration or performance of the baseband chip is low, the baseband chip cannot control the antenna system in a more advanced way. However, if the configuration or performance of the baseband chip is improved, a cost of the baseband chip will be increased.

**SUMMARY**

In view of the above problem, the present disclosure provides a method for communication and a terminal device, which are conducive to saving the cost of the baseband chip.

According to a first aspect, a method for communication is provided, applied at a terminal device, where the terminal device includes a baseband chip, a radio frequency front end, a beam control system, a phase modulator, and an antenna system; where the beam control system is located outside the baseband chip, and the phase modulator has one end connected to one of the antenna system and the radio frequency front end and has the other end connected to the beam control system; and where the beam control system adjusts a generated beam of the antenna system via the phase modulator.

According to a second aspect, a terminal device is provided, including a baseband chip, a radio frequency front end, a beam control system, a phase modulator and an antenna system; where the beam control system is located outside the baseband chip, and the phase modulator has one end connected to one of the antenna system and the radio frequency front end and has the other end connected to the beam control system; and where the beam control system is configured to adjust a generated beam of the antenna system via the phase modulator.

According to a third aspect, an apparatus for communication is provided, including a processor, a memory, and a communication interface, where the memory is configured to store one or more computer programs, and the processor is configured to invoke the one or more computer programs in the memory to cause the terminal device to perform the method according to the first aspect.

According to a fourth aspect, an apparatus is provided, including a processor, where the processor is configured to invoke a program from a memory to perform the method according to the first aspect.

According to a fifth aspect, a chip is provided, including a processor, where the processor is configured to invoke a program from a memory to cause a device installed with the chip to perform the method according to the first aspect.

According to a sixth aspect, a computer-readable storage medium is provided, where the computer-readable storage medium stores a program, and the program causes a computer to perform the method according to the first aspect.

According to a seventh aspect, a computer program product is provided, including a program, where the program causes a computer to perform the method according to the first aspect.

According to an eighth aspect, a computer program is provided, where the computer program causes a computer to perform the method according to the first aspect.

In the embodiments of the present disclosure, the beam control system is set outside the baseband chip and the generated beam of the antenna system is adjusted by the beam control system, which can break the limitation of the performance of the baseband chip, allowing for more advanced control of the antenna system even when the performance of the baseband chip is low. Therefore, the solution of the embodiments of the present disclosure can save the cost of the baseband chip while ensuring the control of the antenna system.

**BRIEF DESCRIPTION OF THE DRAWINGS**

FIG. 1 is an exemplary diagram of a system architecture applicable to a communication system in an embodiment of the present disclosure.

FIG. 2 is an exemplary diagram of a beamforming process.

FIG. 3 is a schematic structural diagram of a radio frequency part of a terminal device.

FIG. 4 is a schematic structural diagram of a terminal device provided in an embodiment of the present disclosure.

FIG. 5 is a schematic flowchart of a method for communication provided in an embodiment of the present disclosure.

FIG. 6 is a schematic flowchart of estimating an angle of an incoming wave signal provided in an embodiment of the present disclosure.

FIG. 7 is a schematic diagram of a baseband chip for estimating a direction of arrival provided in an embodiment of the present disclosure.

FIG. 8 is a schematic structural diagram of an apparatus for communication provided in an embodiment of the present disclosure.

## DETAILED DESCRIPTION OF THE EMBODIMENTS

The following describes the technical solutions in the present disclosure with reference to the accompanying drawings.

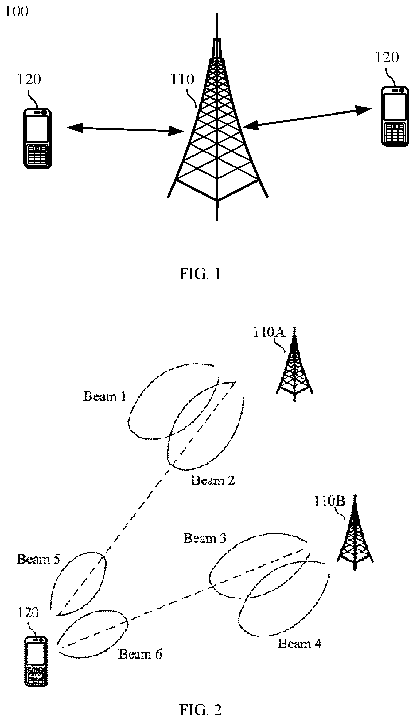

FIG. 1 is a wireless communication system 100 according to an embodiment of the present disclosure. The wireless communication system 100 includes a network device 110 and a terminal 120, and the network device 110 may be a device that communicates with the terminal 120. The network device 110 provides communication coverage for a particular geographic area and communicates with the terminal 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a $5^{th}$ generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal in the embodiments of the present disclosure may be a device that provides voice and/or data connectivity to a user, and may be used to connect a person, an object, and a machine, for example, a handheld device or a vehicle-mounted device having a wireless connection function. The terminal in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal may be deployed on land, including indoor or outdoor, handheld or vehicle-mounted, may be deployed on a water surface, and may also be deployed on an aircraft, a balloon, and a satellite in the air. A scenario in which the network device and the terminal are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

For ease of understanding, concepts involved in the embodiments of the present disclosure are first introduced below.

UPLINK SYNCHRONIZATION

After performing cell search or uplink out-of-synchronization, the terminal device needs to obtain uplink synchronization with the network device. The terminal device may implement uplink synchronization in a random access manner. The network device may transmit configuration information of a random access channel (RACH) to the terminal device in a broadcast form. The configuration information of the RACH may include configuration information of a time-frequency resource of the RACH and configuration information of an initial preamble root sequence. The terminal device may obtain a RACH resource of the preamble and a format of the preamble by receiving the broadcast information.

The purpose of uplink synchronization is to obtain time advance (TA). In the random access process, the network device may know, based on the RACH resource used by the terminal device to transmit the preamble, a time when the terminal device transmits the preamble, so as to determine the TA of the terminal device based on a transmitting time and a receiving time of the preamble, and notify the terminal device via a random access response (RAR).

The manner of the random access is not specifically limited in the embodiments of the present disclosure. For example, the random access may be contention-based random access or non-contention-based random access.

BEAMFORMING SYSTEM

The terminal device of some communication systems (e.g., an NR system) has a beamforming system, so that a beamforming function can be implemented. During downlink reception, the beamforming system may be configured to receive a downlink signal. For example, in the downlink reception process, the terminal device scans receive beams via the beamforming system and receives beams in different directions (or different orientations). Then, the terminal device may select, based on signal strength of each receive beam, the best beam for reception of the downlink signal. Taking FIG. 2 as an example, a terminal device 120 receives a downlink beam (e.g., a beam 1 and a beam 2 in FIG. 2) of a base station 110A, and receives a downlink beam (e.g., a beam 3 and a beam 4 in FIG. 2) of the base station 110B. After comparing each beam signal through the beamforming system, the terminal device 120 finally selects a beam 5 to receive a downlink signal of the base station 110A and selects a beam 6 to receive a downlink signal of the base station 110B. If the uplink and downlink have reciprocity, the terminal device may use a direction of the selected receive beam as a direction of a transmit beam. That is, the terminal device may use the beam 5 to transmit an uplink signal to the base station 110A and the beam 6 to transmit the uplink signal to the base station 110B.

A type of the beamforming is not specifically limited in the embodiments of the present disclosure. For example, the beamforming may be digital beamforming or analog beamforming. Hardware generated by the digital beamforming is large in size and has large power consumption. The analog beamforming has small power consumption and small volume.

MULTIPLE-INPUT MULTIPLE-OUTPUT (MIMO) SYSTEM

MIMO refers to techniques for transmitting and receiving signals using a plurality of antennas in the field of wireless communications. A MIMO system may enable signals to be transmitted and received through a plurality of antennas at a transmitting end and a receiving end, thereby improving communication quality. The MIMO system can make full use of spatial resources and realize multiple-transmitting and multiple-receiving via the plurality of antennas, and can exponentially improve the system channel capacity, coverage range and signal-to-noise ratio without increasing spectrum resources and antenna transmission power. Generally, M×N MIMO means that the transmitting end has M antennas, and the receiving end has N antennas.

According to coherence between antennas of the MIMO system, the MIMO system may include a spatial diversity system and a beamforming system. Beamforming is a signal preprocessing technology based on an antenna array, and beamforming generates beams with directivity by adjusting a weighting coefficient of each element in the antenna array, so that an obvious array gain can be obtained. Therefore, the beamforming technology has great advantages in expanding coverage, improving edge throughput, interference suppression and the like. For example, link quality is improved by using the MIMO system, such as extended coverage, increased throughput, and the like. For another example, cell throughput may be improved and signal interference between terminals may be avoided or eliminated by using the MIMO system.

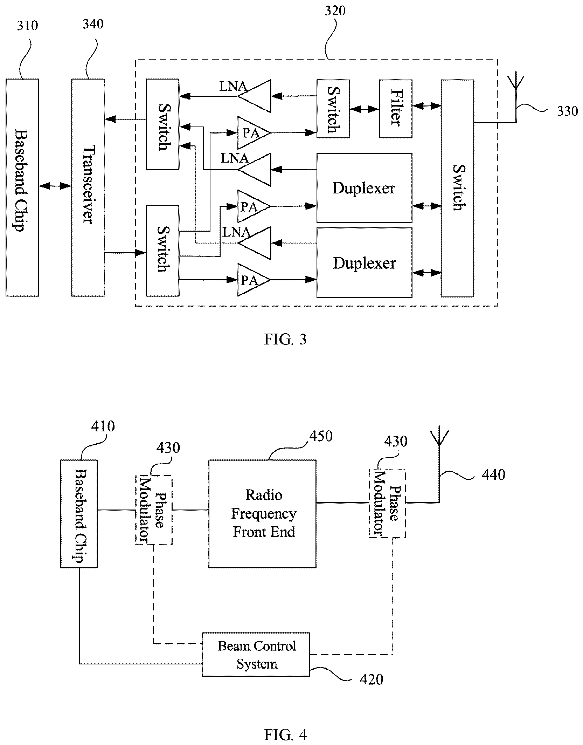

The MIMO system may be implemented via a radio frequency part of the terminal. The radio frequency part may include a baseband chip, a radio frequency front end, and an antenna system. The radio frequency part of the terminal is described below with reference to FIG. 3.

The baseband chip 310 is configured to encode and decode a communication signal and is a core device in the terminal device. The radio frequency front end 320 may include devices such as a filter device, a power amplifier device, a switching device, a low noise amplifier (LNA), and a tuner, and may be configured to amplify a signal, or implement switching between a transmitting signal and a receiving signal, or filter signals of different frequency bands. The radio frequency front end 320 may directly determine a transmission distance and signal transmission quality of the terminal device. The antenna system 330 may be configured to receive or transmit electromagnetic waves.

The baseband chip 310 may be connected to a transceiver 340, and the transceiver 340 may be configured to transmit a signal from the radio frequency front end 320 to the baseband chip or transmit a signal from the baseband chip 310 to the radio frequency front end 320. One end of the radio frequency front end 320 is connected to the transceiver 340, and the other end of the radio frequency front end 320 is connected to the antenna system 330.

For signal receiving, the antenna system may receive a downlink signal transmitted by a network device, and the downlink signal is an electromagnetic wave signal. The antenna system may transmit the received electromagnetic wave signal to the radio frequency front end, and the radio frequency front end converts the electromagnetic wave signal into a baseband signal and transmits the converted baseband signal to the baseband chip. The baseband chip decodes the baseband signal.

For signal transmitting, the baseband chip may encode a signal to be transmitted and transmit the encoded and modulated signal to the radio frequency front end. The radio frequency front end converts the received baseband signal into a wireless electromagnetic wave and transmits the wireless electromagnetic wave to the antenna system, and the antenna system transmits the wireless electromagnetic wave to the network device.

The number of ports supported by the baseband chip is consistent with capabilities of the radio frequency front end and the antenna system. For example, if the number of ports supported by the baseband chip is one, both the number of ports supported by the radio frequency front end and the number of ports supported by the antenna system are also one. That is, the control of the antenna system is from the baseband chip, which means that the baseband chip may control beams generated by the antenna system, including the direction, width, number, and other characteristics of the beams, thereby generating different beams. The baseband chip may control the beam direction by weighting, delay, phase modulation, amplitude modulation, and the like.

According to a protocol specification, the transmission rate of the terminal device is related to the number of MIMO layers. The more the number of MIMO layers, the higher the transmission rate. There is a correlation between the number of MIMO layers and the user category, with different numbers of MIMO layers corresponding to different user categories. Table 1 shows correspondences between user categories, MIMO layers, and transmission rates in LTE.

TABLE 1

| User Category | Downlink Transmission Rate | Maximum Value of Number of Downlink MIMO Layers | Uplink Transmission Rate | Protocol Type |
|---|---|---|---|---|
| NB1 | 0.68 | 1 | 1.0 | Rel 13 |
| M1 | 1.0 | 1 | 1.0 | |
| 0 | 1.0 | 1 | 1.0 | Rel 12 |

(continued)

| User Category | Downlink Transmission Rate | Maximum Value of Number of Downlink MIMO Layers | Uplink Transmission Rate | Protocol Type |
|---|---|---|---|---|
| 1 | 10.3 | 1 | 5.2 | Rel 8 |
| 2 | 51.0 | 2 | 25.5 | |
| 3 | 102.0 | 2 | 51.0 | |
| 4 | 150.8 | 2 | 51.0 | |
| 5 | 299.6 | 4 | 75.4 | |
| 6 | 301.5 | 2 or 4 | 51.0 | Rel 10 |
| 7 | 301.5 | 2 or 4 | 102.0 | |
| 8 | 2998.6 | 8 | 1497.8 | |
| 9 | 452.2 | 2 or 4 | 51.0 | Rel 11 |
| 10 | 452.2 | 2 or 4 | 102.0 | |
| 11 | 603.0 | 2 or 4 | 51.0 | |
| 12 | 603.0 | 2 or 4 | 102.0 | |
| 13 | 391.7 | 2 or 4 | 150.8 | Rel 12 |
| 14 | 3917 | 8 | 9585 | |
| 15 | 750 | 2 or 4 | 226 | |
| 16 | 979 | 2 or 4 | n/a | |
| 17 | 25065 | 8 | n/a | Rel 13 |
| 18 | 1174 | 2 or 4 or 8 | n/a | |
| 19 | 1566 | 2 or 4 or 8 | n/a | |

As can be seen from Table 1, the more the number of MIMO layers, the higher the uplink and downlink transmission rates. The number of MIMO layers is directly related to the number of antennas, and the number of antennas is usually greater than or equal to the number of MIMO layers. The baseband chip may determine the number of MIMO layers based on the terminal capability and control corresponding spatial domain parameters. The larger the number of MIMO layers supported by the baseband chip, the more the antennas that are required, leading to more complex control of the antennas by the baseband chip, which in turn results in a higher cost for the baseband chip.

According to a product manual of the baseband chip, the number of MIMO layers supported by the baseband chip is implemented according to a protocol specification. In order to support beam control, the baseband chip requires a complete set of control from a bottom layer to a high layer of the protocol. Besides, in addition to the MIMO system, the baseband chip further includes other modules. The baseband chip may be executing processing of other modules when it is required to execute MIMO processing, so the baseband chip needs to complete the processing of other modules before it can execute the MIMO processing. Therefore, the baseband chip may have a delay issue when executing the MIMO processing.

Some terminal devices do not have high-speed data transmission requirements. In order to reduce costs, low-configuration baseband chips are used, for example, the number of DL MIMO layers supported by the baseband chip is 1. As described above, the number of ports supported by the baseband chip is consistent with the capability of the antenna system. Therefore, there is only one antenna for downlink reception, i.e., the antenna of the terminal device is an omnidirectional antenna. When the antenna of the terminal device is the omnidirectional antenna, the terminal device does not have a directional receiving capability, and a signal-to-noise ratio of a signal received by the terminal device may be reduced. A lower signal-to-noise ratio may affect the accuracy of some services (such as location) of the terminal device. During location, the location precision of the terminal device may be improved if the terminal device has the directional receiving capability.

As described above, it is known that the control of the antenna system comes from the baseband chip, and the control of the antenna system by the baseband chip is related to the configuration of the baseband chip. When the configuration or performance of the baseband chip is low, the baseband chip cannot control the antenna system in a more advanced way. However, if the configuration of the baseband chip is improved, the cost of the baseband chip is increased.

In order to solve one or more of the above problems, in the embodiments of the present disclosure, the beam control system is disposed outside the baseband chip and the generated beam of the antenna system is adjusted by the beam control system, which can break the limitation of the performance of the baseband chip, allowing for more advanced control of the antenna system even when the performance of the baseband chip is low.

The method in the embodiments of the present disclosure may be applied at a terminal device. As shown in FIG. 4, the terminal device may include a baseband chip 410, a beam control system (or referred to as a MIMO system) 420, a phase modulator 430, and an antenna system 440. The beam control system 420 is located outside the baseband chip 410 and is configured to control a beam generated by the antenna system 440. The beam control system 420 may be disposed between the baseband chip 410 and the antenna system 440.

In some embodiments, the terminal device may further include a radio frequency front end 450, and the radio frequency front end 450 is disposed between the baseband chip 410 and the antenna system 440. The radio frequency front end 450 may be configured to filter, amplify, and process an output signal of the baseband chip 410. In some embodiments, the radio frequency front end 450 converts a baseband signal from the baseband chip 410 into a wireless electromagnetic wave, or converts a wireless electromagnetic wave received by the antenna system 440 into a baseband signal.

The phase modulator 430 may be configured to adjust a direction of the beam generated by the antenna system 440. The phase modulator 430 may be configured to output parameters such as amplitude and phase to change the beam direction of the antenna system 440. One end of the phase modulator 430 may be connected to the beam control system 420 for receiving control information transmitted by the beam control system 420, so as to change the output parameters of the phase modulator 430.

A setting position of the phase modulator 430 is not specifically limited in the embodiments of the present disclosure. The phase modulator 430 may be located anywhere between the baseband chip 410 and the antenna system 440. For example, the phase modulator 430 may be located between the baseband chip 410 and the radio frequency front end 450, i.e., one end of the phase modulator 430 is connected to the baseband chip 410, and the other end of the phase modulator 430 is connected to the radio frequency front end 450. In this case, the phase modulator 430 may adjust the phase and amplitude of the signal output by the baseband chip 410. For another example, the phase modulator 430 may be located between the radio frequency front end 450 and the antenna system 440, i.e., one end of the phase modulator 430 is connected to the radio frequency front end 450, and the other end of the phase modulator 430 is connected to the antenna system 440. In this case, the phase modulator 430 may adjust the amplitude and phase of the signal output by the radio frequency front end 450.

In some embodiments, the phase modulator 430 may be a phase shifter. The phase shifter may be disposed between the radio frequency front end 450 and the antenna system 440, i.e., one end of the phase shifter is connected to the radio frequency front end 450, and the other end of the phase shifter is connected to the antenna system 440.

The beam control system is connected to the antenna system by the phase modulator. The beam control system may control the direction of the beam generated by the antenna system by changing the output parameters of the phase modulator. The beam control system may further be connected to the baseband chip for information interaction with the baseband chip.

The baseband chip in the embodiments of the present disclosure may be a low-configuration baseband chip. In some embodiments, the number of ports supported by the baseband chip is less than the number of ports supported by the antenna system. For example, the number of ports supported by the baseband chip is 1. The baseband chip having one port may also be referred to as a single-antenna baseband chip. The solution in the embodiments of the present disclosure may enable the single-antenna baseband chip to have a beamforming capability, to implement a function of adjusting the beam.

The antenna system in the embodiments of the present disclosure may include a plurality of antenna elements, and the plurality of antenna elements may be arranged according to a certain pattern. For example, the antenna system may be an antenna array. Each antenna element may be provided with a phase modulator for changing a phase relationship of signals between antenna elements. The antenna element changes the phase in a coordinated manner under the control of the phase modulator, thereby achieving rotation scanning of the beam in the air, i.e., realizing beam scanning of the antenna system. Certainly, in some embodiments, a plurality of antenna elements may be provided with one phase modulator, and the phase modulator is configured to adjust phases of the plurality of antenna elements.

A type of the phase modulator is not specifically limited in the embodiments of the present disclosure. For example, the phase modulator may be a digital phase modulator or an analog phase modulator. For another example, the phase modulator may be a reflective phase modulator or a transmissive type phase modulator. For another example, the phase modulator may be a loaded-line phase modulator or a switched-line phase modulator.

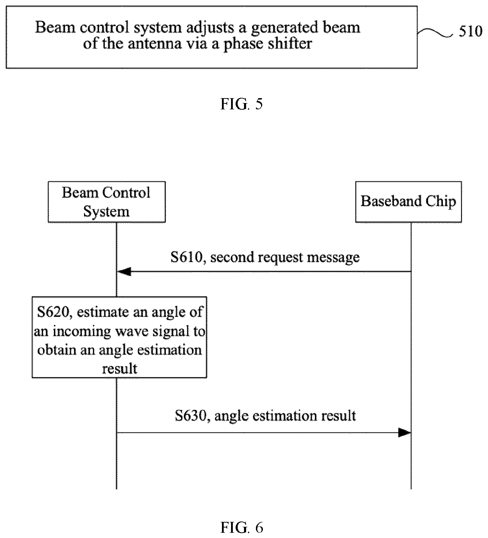

The following describes a method for communication in an embodiment of the present disclosure with reference to FIG. 5.

Referring to FIG. 5, at operation S510, the beam control system adjusts a generated beam of the antenna system via a phase modulator.

In the embodiments of the present disclosure, the antenna system is controlled by the beam control system disposed outside the baseband chip, so that the baseband chip may not be required to have a relatively high configuration, which is beneficial to saving the cost of the baseband chip. In addition, the terminal device in the embodiment of the present disclosure only needs to add the beam control system and the phase modulator to achieve the control of the antenna system, which does not have a great impact on the cost. Furthermore, the beam control system is relatively independent, with low delay, easy system design, and convenience for development and debugging.

Adjusting the generated beam may include adjusting one or more of a direction, a number, a width, etc. of the generated beam.

The beam control system may adjust the generated beam under the indication of the baseband chip or autonomously, which is not specifically limited in the embodiments of the present disclosure. If the adjustment of the generated beam is autonomously performed by the beam control system, the beam control system may automatically determine one or more of the direction, the number, the width, etc. of the generated beam. If the adjustment of the generated beam is performed under the indication of the baseband chip, the beam control system may adjust the generated beam based on the indication of the baseband chip. In some embodiments, the baseband chip may further transmit target beam information to the beam control system, and based on the target beam information, the beam control system may control the antenna system to generate a generated beam consistent with the target beam information. The target beam information includes one or more of a direction, a number, a width, etc. of a target beam. The direction of the target beam may include an angle range of the target beam, or the direction of the target beam may include a direction of one or more beams. If the direction of the target beam includes the angle range of the target beam, the beam control system may control the antenna system to generate beams within the angle range. If the direction of the target beam includes the direction of one or more beams, the beam control system may control the antenna system to generate beams having the same direction as the one or more beams. If the target beam information includes the number of target beams, the beam control system may control the antenna system to generate the same number of beams. If the target beam information includes the width of the target beam, the beam control system may control the antenna system to generate beams with the same width.

In some embodiments, the beam control system may transmit first indication information to the baseband chip, and the target beam information may be determined based on the first indication information. In other words, the baseband chip may determine the target beam information based on the first indication information. The first indication information may include one or more of: whether the beam control system has beam processing capability; a width of the generated beam; a number of generated beams; a direction of the generated beam; a number of supported antennas; a number of supported ports; and a number of supported MIMO layers.

The beam processing capability may refer to a capability of processing or adjusting the generated beam of the antenna system. If the beam control system has the beam processing capability, the baseband chip may indicate the target beam information to the beam control system. If the beam control system does not have the beam processing capability, the baseband chip may not indicate the target beam information to the beam control system. In this case, the baseband chip may control the beam of the antenna system by itself.

If the beam control system reports the width of the generated beam to the baseband chip, the baseband chip may indicate a width of the target beam to the beam control system based on the width of the generated beam. If the beam control system reports the number of the generated beams to the baseband chip, the baseband chip may indicate a number of target beams to the baseband chip based on the number of the generated beams. If the beam control system reports the direction of the generated beam to the baseband chip, the baseband chip may indicate a direction of the target beam to the baseband chip based on the direction of the generated beam.

The number of supported antennas may be understood as the number of antennas that can be controlled by the beam control system. The number of supported antennas may be equal to the number of antennas owned by the antenna system or may be less than the number of antennas owned by the antenna system. If the beam control system reports the number of supported antennas to the baseband chip, the baseband chip may indicate the direction of the target beam and/or the number of target beams to the beam control system based on the number of antennas supported by the beam control system.

In some embodiments, the beam control system may report the number of supported ports to the baseband chip. The larger the number of supported ports, the larger the number of beams that can be generated by the beam control system. The baseband chip may indicate the direction of the target beam and/or the number of the target beams to the beam control system based on the number of ports supported by the beam control system.

In some embodiments, the beam control system may report the number of supported MIMO layers to the baseband chip. The larger the number of supported MIMO layers, the larger the number of antennas supported by the beam control system. The baseband chip may indicate the direction of the target beam and/or the number of the target beams to the beam control system based on the number of MIMO layers supported by the beam control system.

Certainly, in some embodiments, the first indication information may be used to indicate a structure of the antenna system and/or a structure parameter of the antenna system. That is, the beam control system may also report the structure of the antenna system and/or the structure parameter of the antenna system to the baseband chip, so as to enable the baseband chip to locate the terminal device subsequently. The structure of the antenna system may include a linear array. The structure parameter of the antenna system may include a distance between adjacent antennas in the linear array.

The beam control system transmits the first indication information to the baseband chip, where the first indication information may be transmitted on the request of the baseband chip or may be actively transmitted by the beam control system. For example, the baseband chip may transmit a first request message to the beam control system, and in response to the first request message, the beam control system transmits the first indication information to the baseband chip. The first request message is used to request the beam control system to transmit the first indication information to the baseband chip.

The generated beam in the embodiments of the present disclosure may include a receive beam and/or a transmit beam. The following describes the receive beam and the transmit beam, respectively. For ease of description, the beam control system to controlling the antenna system via the phase modulator is referred to as the beam control system controlling the antenna system for short.

If the generated beam is the receive beam, the first indication information may be used to indicate one or more of: whether the beam control system has beam processing capability; a width of a generated receive beam; a number of generated receive beams; and a direction of the generated receive beam.

If the generated beam includes the receive beam, the beam control system may control the antenna system to scan the receive beam. In some embodiments, the beam control system may scan the receive beam or adjust the receive beam of the antenna system according to a signal measurement result of a received signal of the antenna system. As described above, beam information for beam scanning may be autonomously determined by the beam control system, or may be indicated by the baseband chip to the beam control system. That is, the target beam information may refer to the beam information for beam scanning.

The signal measurement result may include one or more of: energy, reference signal received power (RSRP), reference signal received quality (RSRQ), received signal strength indicator (RSSI), received signal level (Rxlev), signal to interference plus noise ratio (SINR).

In the embodiments of the present disclosure, the measurement of the received signal may be performed either by the beam control system or by the baseband chip. If the measurement of the received signal is performed by the baseband chip, the baseband chip may measure the received signal of the antenna system (such as the RSRP of the received signal) and transmit the measurement result to the beam control system. If the baseband chip is integrated with a signal measurement module, the signal measurement module of the baseband chip is multiplexed to measure the signal, which can save the cost of the beam control system.

If the measurement of the received signal is performed by the beam control system, the beam control system may include a signal measurement system that is used to measure a receive beam of a receive antenna. The beam control system may directly control the receive beam of the antenna system based on a measurement result of the signal measurement system without waiting for a processing result of the baseband chip, thereby helping to reduce a delay. In the embodiments of the present disclosure, fast beam scanning is achieved by adding the phase modulator on the antenna side and adding the signal measurement system in the beam control system, thus achieving spatial domain processing with a simple result. In the present disclosure, the signal measurement may be performed in a radio frequency part, and an optimal beam is selected through judgment of a simple measurement result, so that rapid measurement is performed, and time for beam scanning is shortened.

The beam control system may control the antenna system to scan the receive beam and determine an optimal receive beam based on a beam scanning result. The optimal receive beam may serve as a beam for subsequent signal reception. If the uplink and downlink have reciprocity, the optimal receive beam may also serve as a transmit beam. The optimal receive beam may also be referred to as a receive beam of the terminal device.

The optimal receive beam in the embodiments of the present disclosure may refer to a receive beam that satisfies a first condition, where the first condition includes one or more of: signal energy of the receive beam being greater than a preset threshold; RSRP of the receive beam being greater than a preset threshold; RSRQ of the receive beam being greater than a preset threshold; Rxlev of the receive beam being greater than a preset threshold; RSSI of the receive beam being greater than a preset threshold; and SINR of the receive beam being greater than a preset threshold.

In some embodiments, the first condition may include one or more of: the signal energy of the receive beam being highest, the RSRP of the receive beam being largest, the RSRQ of the receive beam being largest, the RXLEV of the receive beam being largest, the RSSI of the receive beam being largest, and the SINR of the receive beam being largest.

The following describes, as an example, a scanning process of the receive beam using the beam control system that includes the signal measurement system. The beam control system weights the phase modulator at a certain angle to form the receive beam. The antenna system receives a wireless signal through the receive beam. The signal measurement system determines a signal measurement result of the receive beam. The beam control system may judge the signal measurement result to determine whether the receive beam is an optimal receive beam or determine whether to use the receive beam as a beam for subsequent signal reception. The beam control system adjusts an angle to weight the phase modulator to obtain another receive beam. The above steps are repeated until all beam directions are scanned or until a satisfactory signal measurement result is obtained. After all the beam directions are scanned, the beam control system may select an optimal receive beam from all receive beams based on the signal measurement result as a receive beam for subsequent signal reception.

Scanning of the receive beam may be used to locate the terminal device. The following describes a location process.

The beam control system weights the phase modulator at a certain angle to form a receive beam. The antenna system receives a wireless signal through the receive beam and synchronizes with the base station. The signal measurement system determines a signal measurement result of the receive beam and records a measurement result of the received signal along with an ID of the base station. The base station is a base station that transmits a signal. The beam control system adjusts an angle to weight the phase modulator and repeats the above steps until all desired receiving directions are scanned. After all the receiving directions are scanned, the terminal device reports recorded information to a location device. The recorded information may include, for example, directions of a plurality of receive beams and respective signal measurement results of the plurality of receive beams, and IDs of base stations corresponding to different receive beams. The base stations corresponding to the different receive beams may be the same or may be different. The location device obtains a location of the base station according to an ID of the base station and performs location calculation in combination with the signal measurement result and direction information of the receive beam, to obtain the location information of the terminal device.

The location device in the embodiments of the present disclosure may be located in a core network. The location device may also sometimes be referred to as a location server or a location resolving server. Taking an NR system as an example, the location device may be a location management function (LMF). Taking another communication system as an example, the location device may be a location management unit (LMU), a location management center (LMC), or an evolved serving mobile location center (E-SMLC). It may be understood that the location device may alternatively be another network element, node, or device that is configured to determine location information of the terminal device, such as a network element or a node that is used to determine location information of the terminal device in a future communication system. A name of the location device is not specifically limited in the embodiments of the present disclosure.

In some embodiments, the beam control system may estimate an angle of an incoming wave signal. The angle estimation may also be referred to as direction of arrival (DOA) estimation, i.e., estimation of an angle of arrival of a downlink signal. For example, the base station may transmit the downlink signal to the terminal device, and the terminal device receives the downlink signal using different receiving directions and estimates a receiving direction of the downlink signal according to signal measurement results of different receiving directions. The angle estimation may be performed autonomously by the beam control system or may be performed based on a request from the baseband chip. As shown in FIG. 6, at operation S610, the baseband chip may transmit a second request message to the beam control system, where the second request message is used to request to estimate an angle of an incoming wave signal. At operation S620, in response to the second request message, the beam control system estimates the angle of the incoming wave signal to obtain an angle estimation result. At operation S630, the beam control system may transmit the angle estimation result to the baseband chip. The angle estimation result may include one or more of angle information of the receive beam, phase information of a phase modulator corresponding to the receive beam, a signal measurement result corresponding to the receive beam, and an identifier of the base station. For example, the angle estimation result may include one or more of: an angle of an optimal receive beam, a signal measurement result corresponding to the optimal receive beam, angles of a plurality of receive beams, signal measurement results corresponding to the plurality of receive beams, an angle difference between different receive beams, phases of phase modulators corresponding to different antenna elements, a phase difference between the phases of the phase modulators corresponding to the different antenna elements, a carrier frequency of a signal, a structure of the antenna system, a structure parameter of the antenna system, and an identifier of the base station.

In order to reduce the difficulty of the beam control system, the beam control system notifies the baseband system of the phase information of the phase modulators corresponding to different antenna elements, and the baseband system estimates the angle according to the phase information.

Taking the angle estimation result including the phase of the phase modulator corresponding to the receive beam as an example, the beam control system may report the phase difference between the phase modulators corresponding to different antenna elements to the baseband chip when receiving the optimal receive beam, and the baseband chip may determine the angle information of the incoming wave according to the phase difference between the phase modulators.

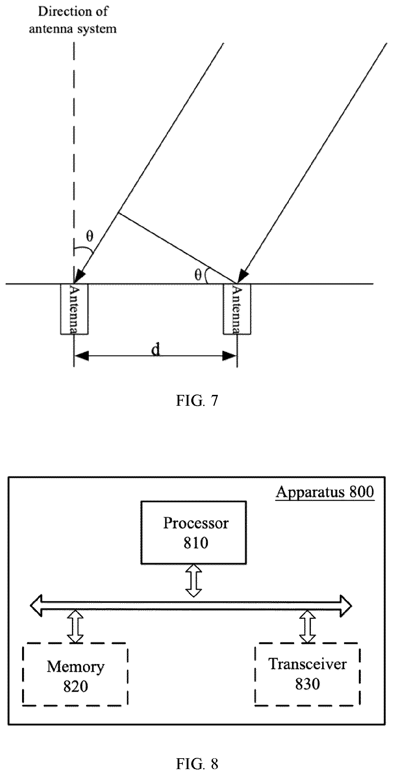

Referring to FIG. 7, if the antenna system is a linear array (or a uniform linear array), taking two adjacent receive antennas as an example, a distance between the two adjacent antennas is d, a phase difference $\varphi$ exists between signals received by the two receive antennas, and the phase difference $\varphi$ satisfies the following equation:

$$\varphi = \frac{2\pi f d sin\theta}{c} \quad \text{(Equation 1)}$$

where $f$ is a carrier frequency, c is a speed of light, and $\theta$ is an angle of an optimal receive beam.

It should be understood that the phase difference $\varphi$ between the signals received by the two receive antennas is equal to a phase difference between phase modulators corresponding to the two antennas.

From the above equation (1), an equation for calculating the angle $\theta$ of the optimal receive beam may be derived as:

$$\theta = \arcsin\left(\frac{c\varphi}{2\pi f d}\right) \quad \text{(Equation 2)}$$

However, $\theta$ in the above equation is determined on the basis of the direction of the antenna system. The direction of the antenna system may be the same as or different from a reference direction of the incoming wave. If the direction of the antenna array is different from the reference direction, the calculated angle $\theta$ needs to be added with an angle difference between the reference direction and the direction of the antenna system. Therefore, the above equation may be transformed into:

$$\theta = \arcsin\left(\frac{c\varphi}{2\pi f d}\right) + \theta_0 \quad \text{(Equation 3)}$$

Equation (3), where $\theta_0$ is the angle difference between the reference direction and the direction of the antenna system. The reference direction may be predefined in a protocol or may be notified by the network device to the terminal device. Taking the linear array as an example, a direction of the linear array is a vertical direction opposite to a direction in which the antennas are arranged.

The baseband chip may estimate an angle of a non-direct path during angle estimation, and the non-direct path may affect the location, resulting in inaccurate location. Therefore, the influence of the non-direct path needs to be eliminated as much as possible. During angle estimation, an angle error generated by the non-direct path may be considered. The above equation (3) may be transformed into:

$$\theta = \arcsin\left(\frac{c\varphi}{2\pi f d}\right) + \theta_0 + a \quad \text{(Equation 4)}$$

where $a$ is an error generated by the non-direct path to the angle estimation.

The $a$ may be obtained by calculating an angle estimation variance and a error mean value of the angle estimation. For example, the equation for calculating $a$ may be as follows:

$$a = \frac{\sqrt{\alpha} + \gamma}{2} \quad \text{(Equation 5)}$$

where $\alpha$ represents the angle estimation variance, and $\gamma$ represents the error mean value of the angle estimation.

Based on the above equation (5), the above equation (4) may be transformed into:

$$\theta = \arcsin\left(\frac{c\varphi}{2\pi f d}\right) + \theta_0 + \frac{\sqrt{\alpha} + \gamma}{2} \quad \text{(Equation 6)}$$

When receiving downlink signals using different receive beams, the beam control system may measure the different receive beams to obtain signal measurement results corresponding to different beams. In some embodiments, the beam control system may determine an optimal receive beam based on the signal measurement results corresponding to different beams, and then report an angle of the optimal receive beam and/or a signal measurement result corresponding to the optimal receive beam to the baseband chip.

In some other embodiments, the beam control system may also report angles of a plurality of receive beams and/or signal measurement results corresponding to the plurality of receive beams to the baseband chip. The plurality of receive beams are not specifically limited in the embodiments of the present disclosure. As one example, the plurality of receive beams may be all receive beams in a scanning process. The beam control system may report related information of all the receive beams in the beam scanning process to the baseband chip. As another example, the plurality of receive beams are part of receive beams in a scanning process. The beam control system only reports related information of some receive beams to the baseband chip. For example, the beam control system may report a receive beam with a better measurement result to the baseband chip. The receive beam with the better measurement result may include, for example, an optimal receive beam and a suboptimal receive beam.

Certainly, in some embodiments, the beam control system may also report an angle difference between different receive beams to the baseband chip. The baseband chip may determine an angle of each receive beam based on the angle difference.

In some embodiments, the beam control system may also report phase information of phase modulators corresponding to different antennas to the baseband chip. The phase information may be a phase of a phase modulator corresponding to each antenna or may be a phase difference between phases of phase modulators corresponding to the different antennas.

The above angle estimation result may be used to locating the terminal device. When locating the terminal device, the accuracy and precision of the location may be improved by using the receive beam with a better measurement result. The baseband chip may transmit the angle estimation result to the location device, and the location device performs location calculation based on the angle estimation result, to determine the location information of the terminal device.

The angle of the receive beam in the angle estimation result may be a relative angle or an absolute angle. The angle in the embodiments of the present disclosure may also be referred to as a direction, and the terms "angle" and "direction" may be used interchangeably according to a specific context.

An absolute direction of the receive beam of the terminal device may be obtained via a direction sensor. The direction sensor may be, for example, a compass. As an example, the terminal device may determine the direction of the receive beam based on the location of the antenna (the direction may be a direction of the receive beam relative to the terminal device, i.e., a direction in a coordinate system of the terminal device) and determine true north according to the direction sensor. Then, the terminal device may determine an absolute direction of a transmit beam based on a direction difference between the true north and the direction of the receive beam. The terminal device may report the absolute direction of the receive beam and the signal measurement result in this direction to the baseband chip. In some embodiments, the terminal device may also report the ID of the base station to the baseband chip.

Due to constraints such as cost and volume, if there is no direction sensor on the terminal, the direction of the receive beam of the terminal device may include the relative direction of the receive beam. The relative direction of the receive beam may indicate a direction difference between receive beams of the terminal device for a plurality of base stations. For example, the terminal device may designate a certain base station as a baseline base station (i.e., using this base station as a reference for measuring the relative direction). When determining the direction of the receive beam, the terminal device may determine a direction difference between a receive beam of a non-baseline base station and a receive beam of the baseline base station. The direction difference can serve as the relative direction of the receive beam of the terminal device mentioned above. In some embodiments, the terminal device may also report an ID of the baseline base station and an ID of the non-baseline base station to the baseband chip.

The beam direction in the embodiments of the present disclosure may include an orientation of a beam and/or a width of a beam.

The foregoing text describes the solution in which the generated beam is the receive beam, and the following describes a solution in which the generated beam is a transmit beam.

If the generated beam is the transmit beam, the first indication information may be used to indicate one or more of: whether the beam control system has beam processing capability; a width of the generated transmit beam; a number of generated transmit beams; and a direction of the generated transmit beam.

The width of the generated transmit beam may be the same as or different from the width of the generated receive beam. The number of generated transmit beams may be the same as or different from the number of generated receive beams. The direction of the generated transmit beam may be the same as or different from the direction of the generated receive beam.

If the generated beam is the transmit beam, the beam control system may control the antenna system to scan the transmit beam via the phase modulator. Specifically, the beam control system may weight the phase modulator at a certain angle to form the transmit beam. The terminal device transmits the uplink signal using the transmit beam. Then, the beam control system adjusts the angle, generates a phase of the phase modulator, and repeats the above steps until signal transmission of all the desired beam directions are completed.

The transmit beam scanning may be used by the terminal device for random access. For example, the beam control system may control the antenna system to generate a plurality of transmit beams. The beam control system may control the antenna system to respectively transmit preambles on the plurality of transmit beams. By transmitting the preambles on the plurality of transmit beams, the terminal device may obtain a plurality of TAs. A condition for triggering the random access may include one or more of initial access and uplink out-of-synchronization.

In some embodiments, transmission of an uplink beam does not need to rely on a specific time-frequency resource, such as initial access. In this case, the beam control system may control the antenna system to transmit the uplink signal on any time-frequency resource.

In some embodiments, the transmission of the uplink beam needs to rely on a specific time-frequency resource. The specific time-frequency resource may be configured by the network device to the terminal device, or may be predefined in a protocol, or may be calculated by the terminal device based on some configuration information. If the transmission of the uplink beam relies on a specific time-frequency resource, the beam control system needs to control the antenna system to transmit the uplink signal on the time-frequency resource, and the time-frequency resource may be notified to the beam control system by the baseband chip.

Taking the transmission of the preamble as an example, the beam control system may control the antenna system to respectively transmit the preambles using a plurality of transmit beams on the first time-frequency resource. The first time-frequency resource is indicated by the baseband chip to the beam control system. In some embodiments, the baseband chip may indicate the first time-frequency resource to the beam control system when transmitting a target beam information to the beam control system. That is, the target beam information may include the time-frequency resource of the transmit beam.

A procedure of the terminal device performing the random access is described below.

The beam control system may weight the phase modulator at a certain angle to form the transmit beam. The terminal device transmits a preamble in the random access procedure on the transmit beam. A format of the preamble may be obtained by reading a downlink broadcast channel. The terminal device receives an RAR transmitted by the base station and obtains a TA from the RAR. The beam control system adjusts the angle, generates the phase of the phase modulator, and repeats the above steps until TAs of all the desired beam directions are obtained.

Before performing the random access, the terminal device may be in a downlink synchronization state or may be in a downlink out-of-synchronization state. If the terminal device is in the downlink out-of-synchronization state, the terminal device needs to perform downlink synchronization before performing random access. The following describes a solution in which downlink synchronization is performed first and then random access is performed.

The beam control system weights the phase modulator at a certain angle to form the transmit beam. The terminal device receives a downlink synchronization signal and performs downlink synchronization. The terminal device receives downlink broadcast information to obtain a format of the preamble. When the uplink and downlink have reciprocity, the terminal device does not change the beam direction, and transmits the preamble in the same direction as the receive beam. The terminal device receives the RAR transmitted by the base station and obtains the TA information from the RAR. The terminal device adjusts the angle, generates the phase of the phase modulator, and repeats the above steps until the TAs of all the desired beam directions are obtained.

The TA in the embodiments of the present disclosure may be used to locate the terminal device. After obtaining the TAs of a plurality of directions, the terminal device may transmit the plurality of TAs to the location device. Specifically, the plurality of TAs may be transmitted by the baseband chip to the location device. In addition to transmitting the plurality of TAs to the location device, the terminal device may further transmit the ID of the base station to the location device. The location device may locate the terminal device based on the plurality of TAs (or the plurality of TAs as well as the ID of the base station).

In some embodiments, the terminal device may transmit the plurality of TAs and their quantization intervals to the location device. The location device may determine a distance between the terminal device and the base station based on the plurality of TAs and their quantization intervals, so as to determine the location information of the terminal device.

Through the foregoing steps, the terminal device may obtain TAs relative to the plurality of base stations. When locating the terminal device, the location device may use the TAs of the terminal device relative to the plurality of base stations to obtain higher location precision. In the embodiments of the present disclosure, even if the configuration of the baseband chip is relatively low, such as the number of ports supported by the baseband chip is 1, the TAs of the plurality of base stations may also be obtained, thereby achieving higher location precision.

The method embodiments of the present disclosure are described in detail above with reference to FIG. 1 to FIG. 6, and apparatus embodiments of the present disclosure are described in detail below. It should be understood that descriptions of the method embodiments correspond to descriptions of the apparatus embodiments, and therefore, reference may be made to the foregoing method embodiments for parts that are not described in detail.

A structural diagram of the terminal device provided in the embodiments of the present disclosure may be shown in FIG. 4. The terminal device shown in FIG. 4 may be any terminal device described above. The terminal device 400 includes a baseband chip 410, a radio frequency front end 450, a beam control system 420, a phase modulator 430, and an antenna system 440.

The beam control system 420 is located outside the baseband chip 410. One end of the phase modulator 430 is connected to the antenna system 440 or the radio frequency front end 450, and the other end of the phase modulator 430 is connected to the beam control system 420. The beam control system 420 adjusts a generated beam of the antenna system 440 via the phase modulator 430.

In some embodiments, the baseband chip is configured to transmit target beam information to the beam control system, and the beam control system is configured to control, via the phase modulator, the antenna system to generate the generation beam that is consistent with the target beam information.

In some embodiments, the beam control system is configured to transmit first indication information to the baseband chip. The target beam information is determined based on the first indication information, and the first indication information is used to indicate one or more of: whether the beam control system has beam processing capability; a width of the generated beam; a number of generated beams; a direction of the generated beam; a number of supported antennas; a number of supported ports; and a number of supported Multiple-Input Multiple-Output (MIMO) layers.

In some embodiments, the baseband chip is configured to transmit a first request message to the beam control system, and the beam control system is configured to transmit the first indication information to the baseband chip in response to the first request message.

In some embodiments, the generated beam includes a receive beam, and the beam control system is configured to scan the receive beam according to a signal measurement result of a received signal of the antenna system.

In some embodiments, the signal measurement result includes one or more of: energy, RSRP, RSRQ, RSSI, SINR, and Rxlev.

In some embodiments, the beam control system includes a signal measurement system for measuring the receive beam of the antenna system.

In some embodiments, the baseband chip is configured to transmit a second request message to the beam control system. The second request message is used to request to estimate an angle of an incoming wave signal. The beam control system is configured to estimate the angle of the incoming wave signal in response to the second request message to obtain an angle estimation result and is configured to transmit the angle estimation result to the baseband chip.

In some embodiments, the angle estimation result includes one or more of: an angle of an optimal receive beam; a signal measurement result corresponding to the optimal receive beam; angles of a plurality of receive beams; signal measurement results respectively corresponding to the plurality of receive beams; an angle difference between different receive beams; phases of phase modulators corresponding to different antenna elements; a phase difference between the phases of the phase modulators corresponding to the different antenna elements; a carrier frequency of a signal; a structure of the antenna system; a structure parameter of the antenna system; and an identifier of a base station.

In some embodiments, the angle estimation result includes a phase difference between phases of phase modulators corresponding to two antenna elements, the carrier frequency of the signal, the structure of the antenna system, and the structure parameter of the antenna system. The structure of the antenna system is a linear array, and the baseband chip is configured to determine, according to the angle estimation result, an angle $\theta$ of the optimal receive beam as:

$$\theta = \arcsin\left(\frac{c\varphi}{2\pi f d}\right) + \theta_0 + \frac{\sqrt{\alpha} + \gamma}{2}$$

where $d$ is a distance between the two antenna elements in the linear array, $f$ is the carrier frequency of the signal, $c$ is a speed of light, $\varphi$ is the phase difference between the phases of the phase modulators corresponding to the two antenna elements, $\theta_0$ is an angle of a direction of the antenna system relative to a reference direction, $\alpha$ is an angle estimation variance, and $\gamma$ is an error mean value of angle estimation.

In some embodiments, the plurality of receive beams include the optimal receive beam and a suboptimal receive beam.

In some embodiments, the plurality of receive beams include all receive beams in a beam scanning process.

In some embodiments, the second request message includes one or both of angle estimation precision and an angle range for angle estimation.

In some embodiments, the angle estimation result is used for locating the terminal device.

In some embodiments, the generated beam includes a transmit beam, and the beam control system is configured to control, via the phase modulator, the antenna system to scan the transmit beam.

In some embodiments, the beam control system is configured to control the antenna system to generate a plurality of transmit beams and is configured to control the antenna system to respectively transmit preambles on the plurality of transmit beams to obtain a plurality of TAs.

In some embodiments, the beam control system is configured to control the antenna system to respectively transmit the preambles on a first time-frequency resource via the plurality of transmit beams. The first time-frequency resource is indicated by the baseband chip to the beam control system.

In some embodiments, the plurality of TAs are used for locating the terminal device.

In some embodiments, the phase modulator is a phase shifter, one end of the phase shifter is connected to the antenna system, and the other end of the phase shifter is connected to the beam control system.

In some embodiments, a number of ports supported by the baseband chip is less than a number of ports supported by the antenna system.

FIG. 8 is a schematic structural diagram of an apparatus according to an embodiment of the present disclosure. The dashed line in FIG. 8 indicates that the unit or module is optional. The apparatus 800 may be configured to implement the method described in the foregoing method embodiments. The apparatus 800 may be one or more of a chip and a terminal device.

The apparatus 800 may include one or more processors 810, and the processor 810 may support the apparatus 800 to implement the method described in the foregoing method embodiments. The processor 810 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 800 may further include one or more memories 820 storing a program, and the program may be executed by the processor 810 to cause the processor 810 to perform the method described in the foregoing method embodiments. The memory 820 may be independent of the processor 810 or may be integrated into the processor 810.

The apparatus 800 may further include a transceiver 830, and the processor 810 may communicate with another device or chip via the transceiver 830. For example, the processor 810 may perform data transceiving with another device or chip via the transceiver 830.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for communication, applied at a terminal device, wherein the terminal device includes a baseband chip, a radio frequency front end, a beam control system, a phase modulator and an antenna system; wherein the beam control system is located outside the baseband chip, and the phase modulator has one end connected to one of the antenna system and the radio frequency front end and has the other end connected to the beam control system; and wherein the method comprises:
   adjusting, by the beam control system, a generated beam of the antenna system via the phase modulator.

2. The method according to claim 1, further comprising:

   transmitting, by the baseband chip, target beam information to the beam control system; and
   wherein the beam control system adjusting the generated beam of the antenna system via the phase modulator includes:
   the beam control system controlling, via the phase modulator, the antenna system to generate the generated beam that is consistent with the target beam information.

3. The method according to claim 2, further comprising:
   transmitting, by the beam control system, first indication information to the baseband chip, wherein the target beam information is determined based on the first indication information, and the first indication information is used to indicate one or more of:

   whether the beam control system has beam processing capability;
   a width of the generated beam;
   a number of generated beams;
   a direction of the generated beam;
   a number of supported antennas;
   a number of supported ports; and
   a number of supported multiple-input multiple-output, MIMO, layers.

4. The method according to claim 3, further comprising:

   transmitting, by the baseband chip, a first request message to the beam control system;
   wherein the beam control system transmitting the first indication information to the baseband chip includes:
   in response to the first request message, the beam control system transmitting the first indication information to the baseband chip.

5. The method according to any one of claims 1 to 4, wherein the generated beam includes a receive beam, the method further comprising:
   scanning, by the beam control system, the receive beam according to a signal measurement result of a received signal of the antenna system.

6. The method according to claim 5, wherein the signal measurement result includes one or more of: energy, reference signal received power, RSRP, reference signal received quality, RSRQ, received signal strength indicator, RSSI, received signal level, Rxlev, signal to interference plus noise ratio, SINR.

7. The method according to claim 5 or claim 6, wherein the beam control system includes a signal measurement system for measuring the receive beam of the antenna system.

8. The method according to any one of claims 1 to 7, further comprising:

   receiving, by the beam control system, a second request message, wherein the second request message is used to request to estimate an angle of an incoming wave signal;
   estimating, by beam control system, the angle of the incoming wave signal in response to the second request message to obtain an angle estimation result; and
   transmitting, by the beam control system, the angle estimation result to the baseband chip.

9. The method according to claim 8, wherein the angle estimation result includes one or more of:

   an angle of an optimal receive beam;
   a signal measurement result corresponding to the optimal receive beam;
   angles of a plurality of receive beams;
   signal measurement results respectively corresponding to the plurality of receive beams;
   an angle difference between different receive beams;
   phases of phase modulators corresponding to different antenna elements;
   a phase difference between the phases of the phase modulators corresponding to the different antenna elements;
   a carrier frequency of a signal;
   a structure of the antenna system;
   a structure parameter of the antenna system; and
   an identifier of a base station.

10. The method according to claim 9, wherein the angle estimation result includes a phase difference between phases of phase modulators corresponding to two antenna elements, the carrier frequency of the signal, the structure of the antenna system, and the structure parameter of the antenna system; and wherein the structure of the antenna system is a linear array, the method further comprising:

    determining, by the baseband chip according to the angle estimation result, an angle $\theta$ of the optimal receive beam as:

    $$\theta = \arcsin\left(\frac{c\varphi}{2\pi f d}\right) + \theta_0 + \frac{\sqrt{\alpha} + \gamma}{2}$$

    wherein $d$ is a distance between the two antenna elements in the linear array, $f$ is the carrier frequency of the signal, $c$ is a speed of light, $\varphi$ is the phase difference between the phases of the phase modulators corresponding to the two antenna elements, $\theta_0$ is an angle of a direction of the antenna system relative to a reference direction, $\alpha$ is an angle estimation variance, and $\gamma$ is an error mean value of angle estimation.

11. The method according to claim 9, wherein the plurality of receive beams include the optimal receive beam and a suboptimal receive beam.

12. The method according to claim 9, wherein the plurality of receive beams include all receive beams in a beam scanning process.

13. The method according to any one of claims 8 to 12, wherein the second request message includes one or both of an angle estimation precision and an angle range for angle estimation.

14. The method according to any one of claims 8 to 13, wherein the angle estimation result is used for locating the terminal device.

15. The method according to any one of claims 1 to 14, wherein the generated beam includes a transmit beam, and the beam control system adjusting the generated beam of the antenna system via the phase modulator includes:
the beam control system controlling, via the phase modulator, the antenna system to scan the transmit beam.

16. The method according to claim 15, wherein the beam control system controlling, via the phase modulator, the antenna system to scan the transmit beam includes:

controlling, by the beam control system, the antenna system to generate a plurality of transmit beams; and
controlling, by the beam control system, the antenna system to respectively transmit preambles on the plurality of transmit beams to obtain a plurality of time advances, TAs.

17. The method according to claim 16, wherein the antenna system respectively transmitting the preambles on the plurality of transmit beams includes:
controlling, by the beam control system, the antenna system to respectively transmit the preambles on a first time-frequency resource via the plurality of transmit beams, wherein the first time-frequency resource is indicated by the baseband chip to the beam control system.

18. The method according to claim 16 or claim 17, wherein the plurality of TAs are used for locating the terminal device.

19. The method according to any one of claims 1 to 18, wherein the phase modulator is a phase shifter, and wherein the phase shifter has one end connected to the antenna system and the other end connected to the beam control system.

20. A terminal device, comprising: a baseband chip, a radio frequency front end, a beam control system, a phase modulator, and an antenna system; wherein the beam control system is located outside the baseband chip, and the phase modulator has one end connected to one of the antenna system and the radio frequency front end and has the other end connected to the beam control system; and wherein the beam control system is configured to adjust a generated beam of the antenna system via the phase modulator.

21. The terminal device according to claim 20, wherein:

the baseband chip is configured to transmit target beam information to the beam control system; and
the beam control system is configured to control, via the phase modulator, the antenna system to generate the generated beam that is consistent with the target beam information.

22. The terminal device according to claim 21, wherein:
the beam control system is configured to transmit first indication information to the baseband chip, wherein the target beam information is determined based on the first indication information, and the first indication information is used to indicate one or more of:

whether the beam control system has beam processing capability;
a width of the generated beam;
a number of generated beams;
a direction of the generated beam;
a number of supported antennas;
a number of supported ports; and
a number of supported MIMO layers.

23. The terminal device according to claim 22, wherein:

the baseband chip is configured to transmit a first request message to the beam control system; and
the beam control system is configured to transmit the first indication information to the baseband chip in response to the first request message.

24. The terminal device according to any one of claims 20 to 23, wherein the generated beam includes a receive beam, and the beam control system is configured to scan the receive beam according to a signal measurement result of a received signal of the antenna system.

25. The terminal device according to claim 24, wherein the signal measurement result includes one or more of: energy, reference signal received power, RSRP, reference signal received quality, RSRQ, received signal strength indicator, RSSI, received signal level, Rxlev, signal to interference plus noise ratio, SINR.

26. The terminal device according to claim 24 or claim 25, wherein the beam control system includes a signal measurement system for measuring the receive beam of the antenna system.

27. The terminal device according to any one of claims 20 to 26, wherein:

the baseband chip is configured to transmit a second request message to the beam control system, wherein the second request message is used to request to estimate an angle of an incoming wave signal; and
the beam control system is configured to estimate the angle of the incoming wave signal in response to the second request message to obtain an angle estimation result and is configured to transmit the angle estimation result to the baseband chip.

28. The terminal device according to claim 27, wherein the angle estimation result includes one or more of:

an angle of an optimal receive beam;
a signal measurement result corresponding to the optimal receive beam;
angles of a plurality of receive beams;
signal measurement results respectively corresponding to the plurality of receive beams;
an angle difference between different receive beams;
phases of phase modulators corresponding to different antenna elements;
a phase difference between the phases of the phase modulators corresponding to the different antenna elements;
a carrier frequency of a signal;
a structure of the antenna system;
a structure parameter of the antenna system; and
an identifier of a base station.

29. The terminal device according to claim 28, wherein the angle estimation result includes a phase difference between phases of phase modulators corresponding to two antenna elements, the carrier frequency of the signal, the structure of the antenna system, and the structure parameter of the antenna system; and wherein the structure of the antenna system is a linear array, and the baseband chip is configured to determine, according to the angle estimation result, an angle $\theta$ of the optimal receive beam as:

$$\theta = \arcsin\left(\frac{c\varphi}{2\pi f d}\right) + \theta_0 + \frac{\sqrt{\alpha} + \gamma}{2}$$

wherein $d$ is a distance between the two antenna elements in the linear array, $f$ is the carrier frequency of the signal, $c$ is a speed of light, $\varphi$ is the phase difference between the phases of the phase modulators corresponding to the two antenna elements, $\theta_0$ is an angle of a direction of the antenna system relative to a reference direction, $\alpha$ is an angle estimation variance, and $\gamma$ is an error mean value of angle estimation.

30. The terminal device according to claim 28, wherein the plurality of receive beams include the optimal receive beam and a suboptimal receive beam.

31. The terminal device according to claim 28, wherein the plurality of receive beams include all receive beams in a beam scanning process.

32. The terminal device according to any one of claims 27 to 31, wherein the second request message includes one or both of angle estimation precision and an angle range for angle estimation.

33. The terminal device according to any one of claims 27 to 32, wherein the angle estimation result is used for locating the terminal device.

34. The terminal device according to any one of claims 20 to 33, wherein the generated beam includes a transmit beam, and the beam control system is configured to control, via the phase modulator, the antenna system to scan the transmit beam.

35. The terminal device according to claim 34, wherein the beam control system is configured to:

control the antenna system to generate a plurality of transmit beams; and
control the antenna system to respectively transmit preambles on the plurality of transmit beams to obtain a plurality of TAs.

36. The terminal device according to claim 35, wherein:
the beam control system is configured to control the antenna system to respectively transmit the preambles on a first time-frequency resource via the plurality of transmit beams, wherein the first time-frequency resource is indicated by the baseband chip to the beam control system.

37. The terminal device according to claim 35 or claim 36, wherein the plurality of TAs are used for locating the terminal device.

38. The terminal device according to any one of claims 20 to 37, wherein the phase modulator is a phase shifter, and wherein the phase shifter has one end connected to the antenna system and the other end connected to the beam control system.

100

110

120

120

FIG. 1

110A

Beam 1

Beam 2

110B

Beam 3

Beam 5

120

Beam 6

Beam 4

FIG. 2

FIG. 3

FIG. 4

Beam control system adjusts a generated beam
of the antenna via a phase shifter $\sim 510$

FIG. 5

Beam Control
System

Baseband Chip

S610, second request message

S620, estimate an angle of
an incoming wave signal to
obtain an angle estimation
result

S630, angle estimation result

FIG. 6

Direction of
antenna system

θ

θ

Antenna

Antenna

d

FIG. 7

Apparatus 800

Processor
810

Memory
820

Transceiver
830

FIG. 8

## INTERNATIONAL SEARCH REPORT

International application No.

**PCT/CN2022/103150**

### A. CLASSIFICATION OF SUBJECT MATTER

H04B 1/40(2015.01)i

According to International Patent Classification (IPC) or to both national classification and IPC

### B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNKI, CNPAT, EPODOC, WPI: 天线, 波束, 控制, 调节, 调相, 基带芯片, 射频, 前端, antenna, beam, control, adjustment, phase modulation, baseband chip, radio frequency, front end

### C. DOCUMENTS CONSIDERED TO BE RELEVANT

| Category* | Citation of document, with indication, where appropriate, of the relevant passages | Relevant to claim No. |
|---|---|---|
| X | CN 114531182 A (NANJING ZTE NEW SOFTWARE CO., LTD.) 24 May 2022 (2022-05-24)<br>description, paragraphs [0096]-[0183] | 1-38 |
| X | CN 106169654 A (NO.38 RESEARCH INSTITUTE OF CETC) 30 November 2016 (2016-11-30)<br>description, paragraphs [0027]-[0053] | 1-38 |
| A | CN 103916171 A (CHINA ACADEMY OF TELECOMMUNICATIONS TECHNOLOGY) 09 July 2014 (2014-07-09)<br>entire document | 1-38 |
| A | US 2020212978 A1 (SONY CORP.) 02 July 2020 (2020-07-02)<br>entire document | 1-38 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/103150**

| Patent document cited in search report | | | Publication date (day/month/year) | Patent family member(s) | | | Publication date (day/month/year) |
|---|---|---|---|---|---|---|---|
| CN | 114531182 | A | 24 May 2022 | WO | 2022095510 | A1 | 12 May 2022 |
| CN | 106169654 | A | 30 November 2016 | None | | | |
| CN | 103916171 | A | 09 July 2014 | None | | | |
| US | 2020212978 | A1 | 02 July 2020 | CN | 109660284 | A | 19 April 2019 |
| | | | | WO | 2019072167 | A1 | 18 April 2019 |
| | | | | EP | 3696990 | A1 | 19 August 2020 |
| | | | | CN | 111164904 | A | 15 May 2020 |

Form PCT/ISA/210 (patent family annex) (January 2015)